(19) Europäisches Patentamt
European Patent Office
Office européen des brevets

(11) **EP 3 532 268 B1**

(12) **EUROPEAN PATENT SPECIFICATION**

(45) Date of publication and mention
of the grant of the patent:
**06.07.2022 Bulletin 2022/27**

(21) Application number: **17807946.3**

(22) Date of filing: **27.10.2017**

(51) International Patent Classification (IPC):
**B29C 64/171** *(2017.01)*    **B29C 64/393** *(2017.01)*
**B33Y 30/00** *(2015.01)*

(52) Cooperative Patent Classification (CPC):
**B29C 64/171; B29C 64/393; B33Y 30/00**

(86) International application number:
**PCT/PT2017/000018**

(87) International publication number:
**WO 2018/080331 (03.05.2018 Gazette 2018/18)**

(54) **MODULAR ADDITIVE MANUFACTURING SYSTEM**

MODULARES SYSTEM FÜR DIE GENERATIVE FERTIGUNG

SYSTÈME MODULAIRE DE FABRICATION ADDITIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2016 PT 2016109710**

(43) Date of publication of application:
**04.09.2019 Bulletin 2019/36**

(73) Proprietor: **Instituto Superior Técnico**
**1049-001 Lisboa (PT)**

(72) Inventors:
• **MATEUS DE MARQUES FRUTUOSO, Nuno André**
**2670-540 Loures (PT)**
• **DE ARAGÃO BARROS E ALVIM BOTO, João Francisco**
**1050-068 Lisboa (PT)**

• **MARTINS DE MATOS VENTURA, Rodrigo**
**1990-503 Sacavém (PT)**
• **DE OLIVEIRA LEITE, Marco Alexandre**
**1000-209 Lisboa (PT)**
• **GALRÃO DOS REIS, Luis Filipe**
**2635-325 Rio De Mouro (PT)**
• **RELÓGIO RIBEIRO, António Manuel**
**2745-200 Queluz (PT)**
• **RODRIGUES SIMÕES SOARES, Bruno Alexandre**
**1900-087 Lisboa (PT)**

(74) Representative: **do Nascimento Gomes, Rui**
**J. Pereira da Cruz, S.A.**
**Rua Victor Cordon, 10-A**
**1249-103 Lisboa (PT)**

(56) References cited:
**EP-A1- 2 289 652      US-A1- 2015 035 198**
**US-A1- 2015 165 676      US-B1- 9 011 136**

**Description**

**Field of the invention**

The following invention is related to the additive manufacturing systems topic and it introduces an efficient solution for increasing the fabrication volume and/or part dimensions, without proportionally increasing the fabrication time, while maintaining dimensional accuracy and surface finish quality.

Technical field to which the invention relates

The following invention is related to the technical subject of the additive manufacturing systems and it introduces a modular additive manufacturing system, which composed of at least one platform module (2), at least one upper deposition module (3), or at least one lower deposition module (4) or the combination of at least one upper deposition module (3) and at least one lower deposition module (4). All these modules are removable and interchangeable, suitable for any type of fabrication technology which deposits material along a trajectory.

State of the art

Additive manufacturing systems using technologies for material deposition along a predefined trajectory are in high demand in industry because they can fabricate very complex parts without molds or machining. Using layer by layer fabrication, these additive manufacturing systems can produce parts with a high degree of geometric complexity and that are impossible to fabricate using other fabrication techniques.

Additive manufacturing systems enable the diversification and customization of production parts because they not use molds, on the contrary, these systems produce parts following fabrication instructions for each layer deposition. This way, additive manufacturing systems are capable of manufacturing for example, molds for other fabrication techniques, costing a fraction of the price when compared with the traditional molding techniques. These manufacturing systems are able to manufacture parts in materials like polymers, plastics, ceramics and metallic alloys and they are economically profitable for the production of single parts, in small and medium batches, depending on the case.

The conventional additive manufacturing systems, for material deposition along a trajectory, utilize one deposition head that may contain one or more deposition nozzles. The deposition nozzle diameter is one of the characteristics that most limits the resolution and dimensional accuracy obtained in the manufactured part.

The smaller the opening of the nozzle is, the higher the resolution and the quality of the finishing obtained in the surface of the part.

However, the smaller the opening of the nozzle is, the lower the volume of deposited material is which means that the deposition path for the manufacturing of the part is longer and consequently, the fabrication time is longer.

Thus, the conventional additive manufacturing systems are efficient for limited volumes and, inefficient for the manufacture of parts with larger dimensions since the increase in part volume, while maintaining the same finish quality, results in a proportional increase of the fabrication time.

In a conventional additive manufacturing system, the printing platform has small fixed dimensions, mostly quadrangular and with only a few hundred millimeters in length, constraining the users to manufacture parts in sections and gluing them together in post-processing, when these cannot be manufactured within the available printing volume. This post-processing increases the manufacturing cost and can reduce the finished part precision. In addition, these unions can compromise the mechanical and aesthetic characteristics of the part.

It is in the interest of the industry to increase the production volume of parts per unit of time, *i.e.,* reduce the amount of time necessary to fabricate each layer that constitutes the part. This problematic has been addressed in two different perspectives:

    1. Increasing the volume of material deposited by the deposition head.
    2. Increasing the number of deposition heads for simultaneous manufacturing.

In the first case, multiple deposition nozzles with different diameters, or a nozzle with changeable diameters are used, together with adaptive slicing techniques which applies the smaller diameter nozzle to the perimeters and small details and use a larger nozzle for faster infill of the part. This approach can reduce the fabrication time of solid parts or thick walls. However, the improvements are limited by the difference between the thinner and larger nozzle.

In the second case, two approaches are presented in the State of the Art and diverge on the application of the technique:

    a. The document US2016067920A1 shows simultaneous deposition of multiple equal parts. This application is intended for the simultaneous replication of multiple equal parts. The deposition heads are fixed with static distances between them during the fabrication and are mechanically coupled.
    b. The simultaneous deposition of multiple parts or different parts. This application allows for the use of one or more deposition heads, working at the same time, cooperating in the fabrication of the same part, or multiple equal or different parts. The deposition heads motion are independent in at least two axes. This technique is suitable for large parts fabrication, in other words, parts which envelope is larger than the conventional additive manufacturing systems.

Systems with multiple independent deposition heads can, in theory, considerably reduce the fabrication time.

Within the scope of this application, relevant studies and patents have been presented. Paul Wachsmuth, in his master degree thesis, introduces a mechanical configuration for multiple deposition heads inside a machine. A pair of rails along the X direction is shared by multiple gantries in which each deposition head travels in the Y direction. One or more pairs of rails can be placed side by side in Y direction. However, in order to have overlapping depositions from side by side rails, Wachsmuth introduces the use of telescopic arms, which he admits being very limited to the system due to stability issues. The author admits these limitations reduce the implementation of multiple deposition heads to a maximum of 3 pairs of rails in the Y direction.

Paul Wachsmuth also introduces a new method for tool path generation based on the division of the part into sub-regions. Each of these sub-regions is fabricated using a single deposition head at a time, ensuring no collisions during the fabrication. Although this algorithm facilitates the trajectories generation, from a mechanical and aesthetic point of view, multiple bonding surfaces between the sub-regions are generated which can reduce the mechanical resistance of the part.

Another solution is introduced by the patent US9011136B1, in which a machine is constituted by a single platform and a single pair of shared rails. These gantries are coupled intercalated to the rails and their motion can be independent, or mechanically synchronized with another gantry in the same rail. A deposition head moves in this gantry. This system is scalable along the length direction, but since it only has one deposition platform, the system is only efficient for long parts. Therefore, it is less efficient for multiple parts or shorter parts with different heights. US 2015/165676 A1 discloses a modular additive manufacturing system comprising a main rigid frame and: a) a deposition subsystem, composed of an upper deposition module, mounted on at least one pair of upper rails; b) a support subsystem , composed of at least one platform module, connected to the main rigid frame using fixation elements; c) a control subsystem for the control of the deposition subsystem and the support subsystem.

Additive manufacturing is a fast-growing industry, and constantly adapting to new production needs requires flexible fabrication systems. The conventional systems are not mechanically reconfigurable, the build volumes are limited and use a single deposition system. Different types of production, parts dimensions and quantities may require different machines which leads to large investments and require a high occupancy rate.

Despite these disadvantages, a system capable of providing these advantages was not yet found.

The object of the following invention introduces a modular additive manufacturing system to overcome the disadvantages presented on the State of the Art. In particular, this invention introduces an efficient solution for increasing the fabrication volume and/or part dimensions, without proportionally increasing the fabrication time, while maintaining dimensional accuracy and surface finish quality.

This objective is reached with a system characterized in that it comprises a main rigid frame (1), a deposition subsystem that comprises one or more deposition modules, and a support subsystem that comprises one or more platform modules (2), and a controlling subsystem for the subsystems presented.

Surprisingly, it was found that the system proposed in the present invention, a modular additive manufacturing system, allows the fabrication of large parts or multiple parts concurrently or not, which enables this system to be used in a wide variety of industries where the dimensions, fabrication time and surface quality of the parts produced by additive manufacturing are important.

## Summary of the invention

The current invention refers to a modular additive manufacturing system as defined in claim 1 as well as a computer implemented method that uses this system.

The system of the present invention is removable and interchangeable, characterized by being possible to use, controlled and in coordination, at least one upper deposition module (3), or at least one lower deposition module (4), or the combination of at least one upper deposition module (3) and at least one lower deposition module (4) and at least one platform module (2) concurrently, or not.

According to the present invention, a combination of at least one upper deposition module (3) and at least one lower deposition module (4) are required to manufacture, simultaneously, coordinately and cooperatively, a part with large dimensions; or manufacture different parts simultaneously; or both tasks simultaneously.

Each upper deposition module (3) and each lower deposition module (4) are mechanically independent in the x and y directions. Their control process ensures the manufacturing of the entire layer of a part avoiding collisions. The upper deposition module (3) and the lower deposition module (4) are characterized in that they allow a partial overlapping of their manufacturing areas with the areas of the adjacent modules, in any direction X and Y.

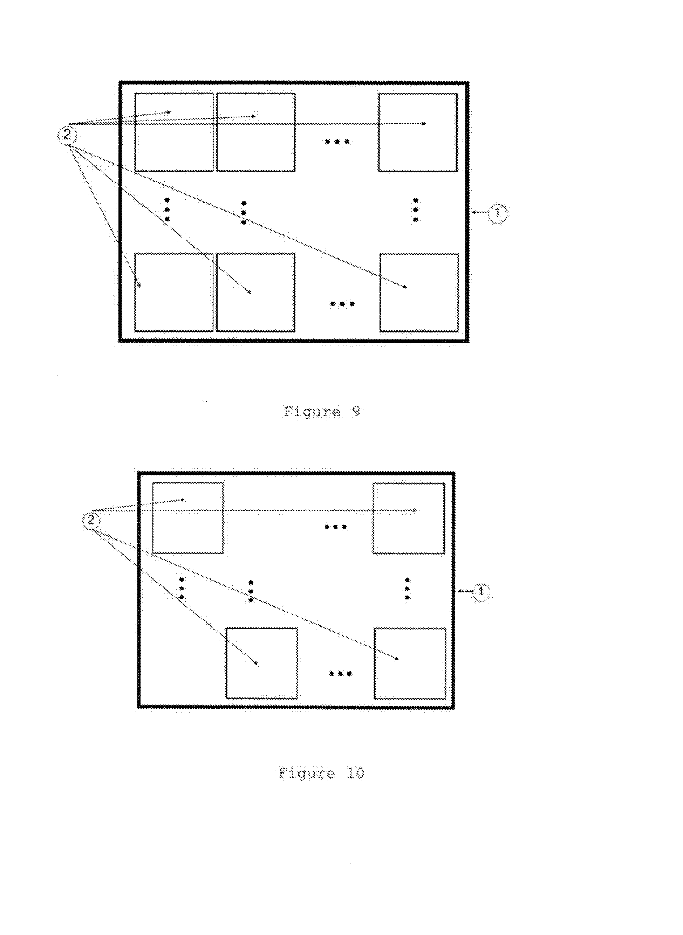

The system of the present invention is scalable with respect to the number of platform modules (2), adapting the system resources to the production heeds, being limited by the dimensions of the main rigid frame (1). Figure 9 demonstrates the scalability of the number of platform modules (2) proposed in this invention.

In one embodiment, the system of the present invention is scalable with respect to the number of upper deposition modules (3) and the number of lower deposition modules (4), adapting the system resources to the production needs being limited by the dimensions of the main rigid frame (1), also limited by the minimum distance between upper deposition modules (3) and also limited by the minimum distance between lower deposition modules (4).

Each platform module (2) is mechanically independent from the others. Its own control process assures its appropriate movement towards the Z direction for a correct part fabrication.

The algorithm used in this invention includes, successively, for each layer, the deposition platforms (6) required to the parts fabrication.

The controlling subsystem, that controls the deposition subsystem and support subsystem is composed of a computer program that transforms each layer of a previously sliced part, into a sequence of controlling instructions and deposition trajectories.

The deposition trajectories are generated in a way that collisions between the several upper deposition modules (3) and lower deposition modules (4) are avoided during the fabrication process.

**Description of the drawings**

The description of the drawings is provided in detail using the following examples as merely illustrative of the concepts explained, since the figures do not provide any type of limitation to the scope of this invention.

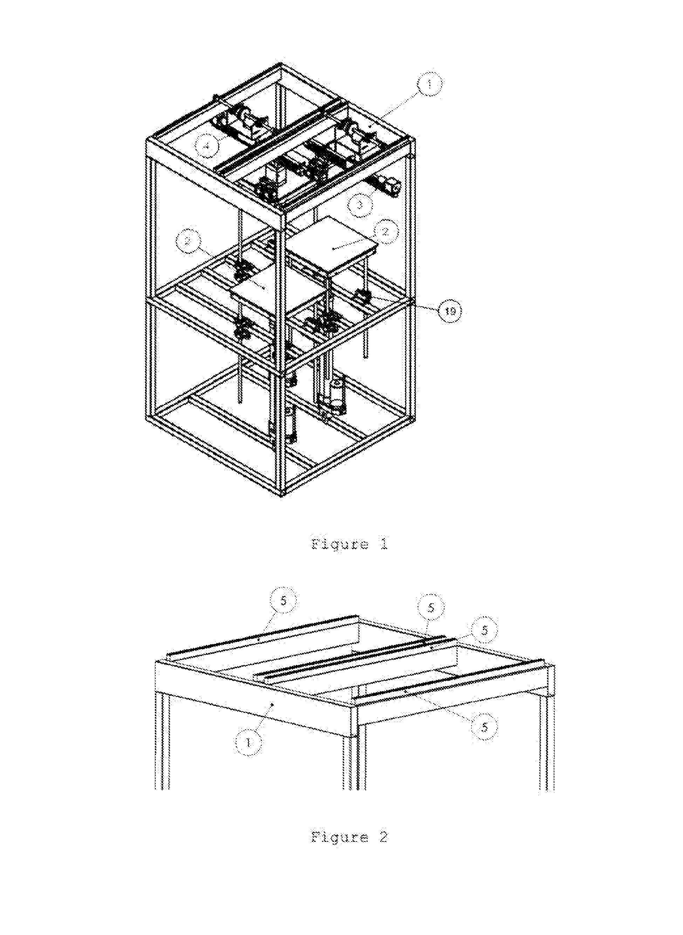

Figure 1 represents the proposed additive manufacturing system, composed of a main rigid frame (1), in which are included the fixation elements (19) of each platform module (2) to the structure of the main rigid frame (1), a deposition subsystem that comprises at least on upper deposition module (3), at least on lower deposition module (4), and a support subsystem comprising at least one platform module (2).
Figure 2 represents the main rigid frame (1) and a pair of upper rails (5) aligned with the Y-axis.

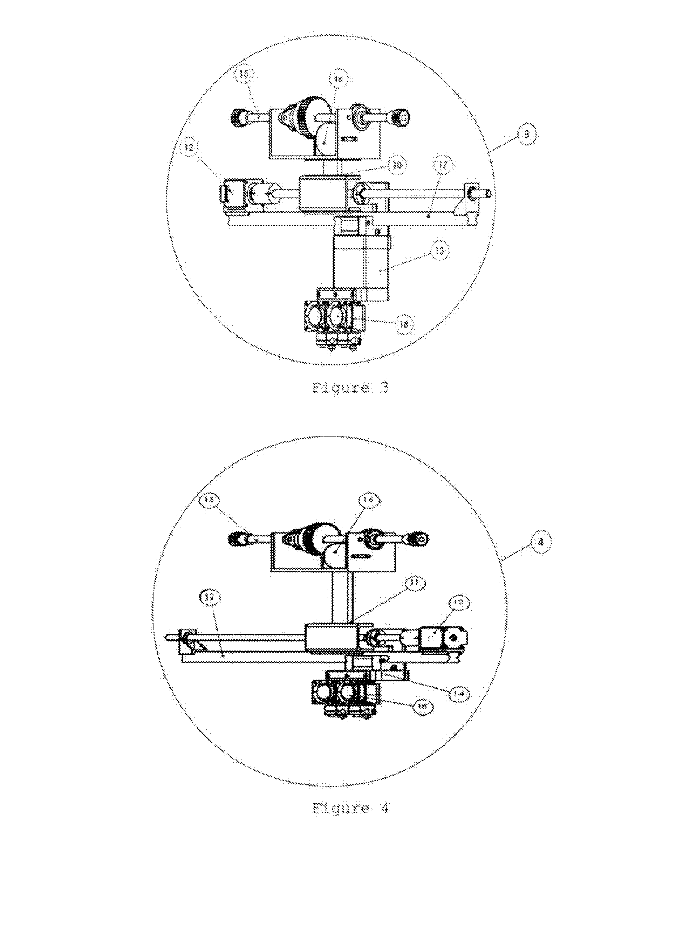

Figure 3 represents the upper deposition module (3) in which the upper gantry (10), the lower actuator mechanism (12), the upper deposition head (13), the shaft (15), the upper actuator (16), the lower rail (17) and the deposition nozzles (18) can be observed.
Figure 4 represents the lower deposition module (4) in which the lower gantry (11), the lower actuation mechanism (12), the lower deposition head (14), the shaft (15), the upper actuator (16), the lower rail (17) and the deposition nozzles (18) can be observed.

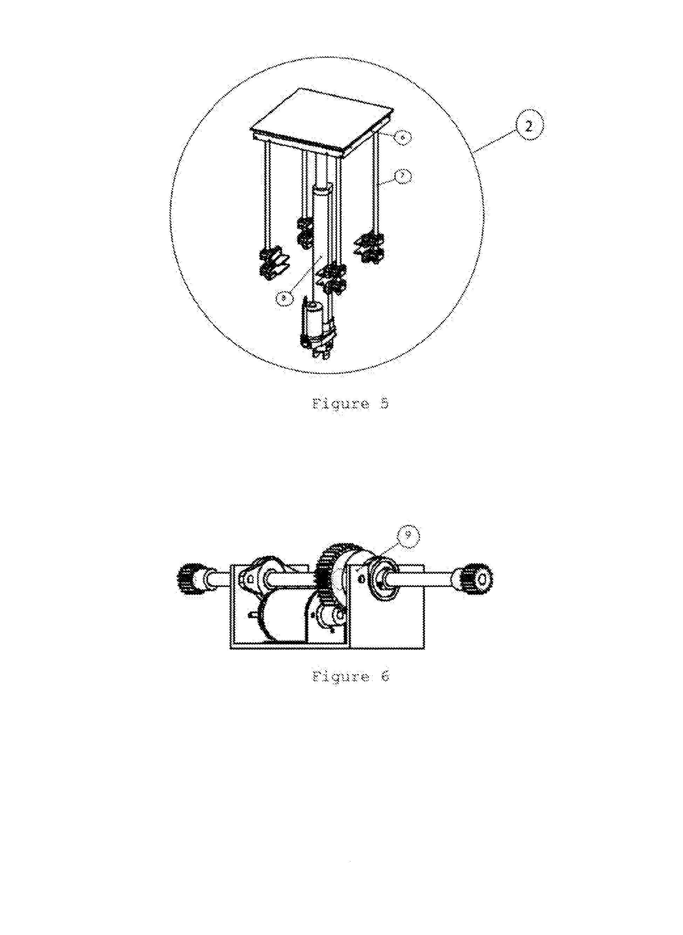

Figure 5 represents the platform module (2) with the deposition platform (6), its linear guides (7) and a vertical actuator (8).
Figure 6 represents the top driving unit that provides motion to the upper actuation mechanism (9).
Figure 7 represents the distribution of the upper deposition modules (3) along a pair of upper rails (5), inside the main rigid frame (1). Figure 7 represents the scalability of the system of the present invention with respect to the number of the upper deposition modules (3) along a pair of upper rails (5), inside the main rigid frame (1).

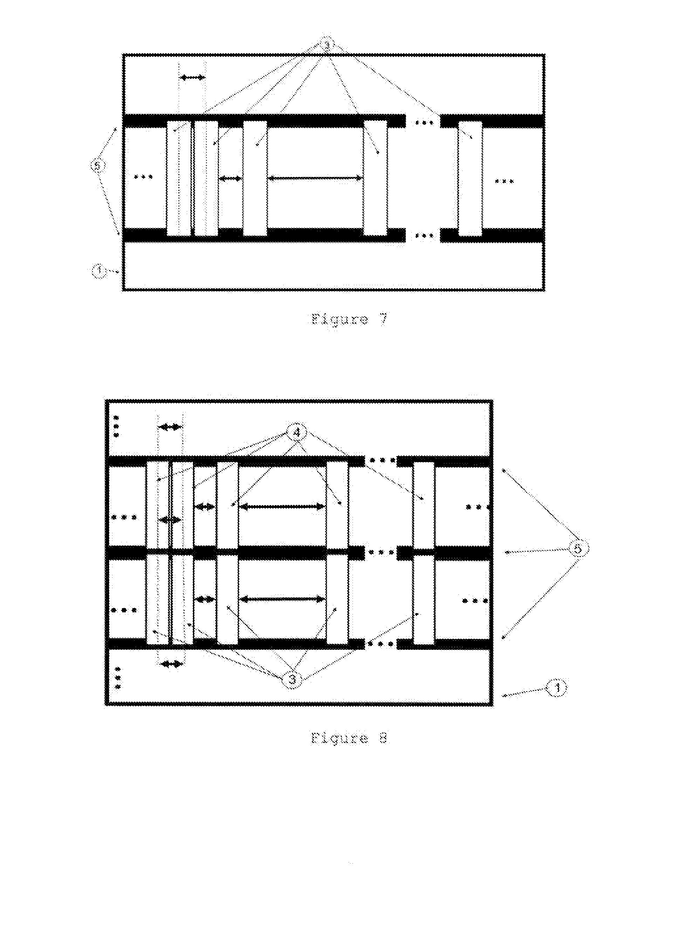

Figure 8 represents the distribution of at least one upper deposition module (3) and the distribution of at least one lower deposition module (4) along an upper pair of rails (5), inside the main rigid frame (1). Figure 8 demonstrates the scalability of the system of the present invention with respect to the number of upper deposition modules (3) along a pair of upper rails (5). Figure 8 also demonstrates the scalability of the system of the present invention according to the number of lower deposition modules (4) along a pair of upper rails (5). Figure 8 further demonstrates the scalability of the system of the present invention with respect to the number of series of upper deposition modules (3) and the number of series of lower deposition modules (4), along the pairs of upper rails (5), inside the main rigid frame (1).
Figure 9 represents the distribution of at least one platform module (2) inside the main rigid frame (1) up to the limit of number of platform modules (2) inside the main rigid frame (1).
Figure 10 represents a distribution of at least one platform module (2) inside the main rigid frame (1), for an available number of platform modules (2), which is not the maximum number of platform modules (2) inside the main rigid frame (1).

**Detailed Description of the Invention**

The current invention refers to a modular additive manufacturing system that allows for the increase of the dimensions of a part to manufacture and/or increase the production volume without proportionally increasing the fabrication time, while maintaining the sub-millimetric precision and finishing quality.

The present invention is composed of a main rigid frame (1); a deposition subsystem comprising at least one upper deposition module (3) or at least one lower deposition module (4), or their combination; a support subsystem comprising at least one platform module (2) and a further controlling subsystem that allows for the control of the several other modules: upper deposition modules (3), lower deposition modules (4) and platform modules (2).

The main rigid frame (1) supports all the other elements of the system, including a pair of upper rails (5) aligned along the Y-axis, where the upper deposition modules (3) and the lower deposition modules (4) move and the fixation elements (19) for the support subsystem of the platform module (2).

The modular additive manufacturing system of the present invention has a working principle based on 3 axes (X, Y and Z). The upper deposition module (3) and the lower deposition module (4) can move along the X and Y-axes in order to deposit material along the predefined (generated) trajectories. The material being deposited is supported by the platform module (2) which ensures the progression of the fabrication in layer, moving the deposition platforms (6) along the Z-axis.

The upper deposition module (3) and the lower deposition module (4) are composed of four elements: the upper actuation mechanism (9); a lower actuation mechanism (12); an upper gantry (10); a lower gantry; and an upper deposition head (13) and a lower deposition head (14) respectively.

The upper actuation mechanism (9) contains a shaft (15) and a motor actuating on this shaft (15) to perform the movement of the upper deposition module (3) or lower deposition module (4) where it belongs, along a pair of upper rails (5) aligned with the Y-axis.

The upper deposition module (3) differs from the lower deposition module (4), since despite the deposition nozzles (18) of both modules being coplanar, the lower rail (17) is positioned at a different height for both modules, because the first is composed of an upper gantry (10) and an upper deposition head (13) while the second is composed of a lower gantry (11) and a lower deposition head (14).

The upper gantry (10) and the lower gantry (11) support the upper deposition head (13) and the lower deposition head (14) respectively, which move over a lower rail (17) aligned with the X-axis.

The system of the present invention is scalable with respect to the number of platform modules (2), adapting these system resources to production needs, limited by the dimensions of the main rigid frame (1).

In one embodiment, the system of the present invention is scalable with respect to the number of upper deposition modules (3) and the number of lower deposition modules (4), adapting the system resources to the production needs. The number of these modules is limited by the dimensions of the main rigid frame (1), limited by the minimum distance between upper deposition modules (3) and also limited by the minimum distance between lower deposition modules (4).

Several upper deposition modules (3) and several lower deposition modules (4) can be placed along the Y-axis, sharing the same pair of upper rails (5). Other pairs of upper rails (5) can be placed along the X-direction.

The upper deposition head (13) and the lower deposition head (14) are coplanar and they move independently along the X and Y-axes.

The nomenclature of "X and Y-axes" used in the present invention does not imply that these axes are necessarily orthonormal.

When a part is fabricated by at least one upper deposition module (3), or at least one lower deposition module (4), or a combination of at least one upper deposition module (3) and at least one lower deposition module (4) simultaneously, it is important to produce a robust seam in the areas where different deposition modules meet, with the intercalation of layers deposition by different modules. There will be an intersection of fabrication areas along Y-axis and X-axis. The intersection along the Y-axis occurs because each upper deposition head (13) shares the same pair of upper rails (5) and because each lower deposition head (14) shares the same pair of upper rails (5), different from the first. The intersection along the X-axis occurs because the length of the lower rail (17) intersects the deposition area of the upper deposition modules (3) or lower deposition modules (4) on the adjacent upper rails (5).

This characteristic of the system is achievable because the upper gantries (10) and the lower gantries (11) have a "T" shape and the lower rail (17), where the upper deposition head (13) and the lower deposition head (14) move, has a length longer than the deposition platform (6) above which it is positioned.

With this configuration, the collisions between modules can occur if and only if an upper deposition module (3) and a lower deposition module (4), adjacent along the X-axis occupy the same coordinate in Y-axis, the upper deposition head (13) is positioned in a coordinate of the X-axis that is also occupied by the lower rail (17) of the adjacent lower deposition module (4).

The computer program ensures the trajectories of the upper deposition heads (13) and the lower deposition heads (14) are generated in a way that prevents collision during fabrication.

The subsystem of platform modules comprises a deposition platform (6) with, at least, one linear guide (7) and a vertical actuator (8), positioned under the deposition platform (6).

The control of each platform module (2) is completely independent of the control of the others, allowing each deposition platform (6) to be allocated to a job/fabrication if and only if the platform is required and only at the moment in which it is necessary.

The upper deposition module (3), the lower deposition module (4) and the platform module (2) are removable and interchangeable, i.e., it is possible to remove or place a desired number of upper deposition modules (3), lower deposition modules (4) and platform modules (2), as long as they fit inside the main rigid frame (1). Therefore, it is possible to configure the system resources according to fabrication needs, considering that, the higher the number of upper deposition modules (3) and lower deposition modules (4) simultaneous fabricating the same part, the lower the fabrication time of this part will be.

The controlling subsystem comprises a computer used to control each platform module (2), each upper deposition module (3) and each lower deposition module (4), in a coordinated manner. The controlling subsystem is used for the generation and control of the fabrication trajectories.

The computer program controls at least one upper deposition module (3), at least one lower deposition module (4), or a combination of these modules and controls also at least one platform module (2), all in coordinated manner, according to the characteristics of the parts to be fabricated, production needs and deposition technology implemented.

Due to the mechanical independency of each platform module (2), the vertical position of the deposition platform (6) is individually controlled in each module and coordinated with the other platform modules (2), upper deposition modules (3) and lower deposition modules (4).

For this reason, two or more deposition platforms (6) are coplanar if and only if the fabrication of a part requires the coplanarity of the deposition platforms (6) of the platform modules assigned to the fabrication of that part.

The controlling subsystem controls all the specific characteristics required by the deposition process in use, independently for each platform module (2). The control of these characteristics may require sensors and actuators specific for the deposition technique used.

An example of these characteristics is the temperature of the deposition platform (6) using FDM technology (Fused Deposition Modeling). The fabrication of parts on multiple deposition platforms (6), using different materials, may require different temperatures on different deposition platforms (6) of the platform modules (2) assigned to the fabrication.

The computer program defines the fabrication temperature according to the deposition material used and controls this temperature in the deposition platform (6), independently from the temperature on the other deposition platforms (6).

The computer program controls each upper deposition module (3) and each lower deposition module (4) in a coordinated manner with the platform modules (2) preventing collisions between them, in order to mitigate the existence of collisions between the modules. Each upper deposition module (3) has at least one upper deposition head (13) which is controlled according to the deposition technology used for each upper deposition head (13). Each lower deposition module (4) has at least one lower deposition head (14) which is controlled according to the deposition technology used for each lower deposition head (14).

The controlling subsystem controls all the specific characteristics required by the deposition process in use, independently for each upper deposition module (3) and each lower deposition module (4). An example of these characteristics is the extruder temperature required using FDM technology, which can be different for distinct deposition materials.

The control position, along the plane XY, for each upper deposition module (3) and each lower deposition module (4) is made according to the deposition trajectories and instructions generated by the computer program for the fabrication of the part, parts or parts of parts, through material deposition along the generated paths and avoiding collisions between one or more upper deposition modules (3) and one or more lower deposition modules (4).

The controlling subsystem is composed of a computer program that transforms each layer of at least one sliced part into a set of controlling instructions and deposition trajectories of at least one upper deposition module (3) or at least one lower deposition module (4). The controlling instructions are generated in a way that guarantees the absence of collision between modules.

The method for the generation of trajectories and deposition instructions, implemented on a computer, comprises the following steps:
The controlling subsystem allows for the fabrication of one or more parts to be started while occurs the fabrication of another or other parts, implementing the trajectories generation method and instructions of deposition in two different ways:

1. Generates groups of combinations of fabrication scenarios with diverse positions and orientations for the new parts, composed by the combination of at least one platform module (2), of at least one upper deposition module (3), of at least one lower deposition module (4), assigned to the fabrication of at least one model part; Iteratively divides the area of each layer of at least one part, by the number of upper deposition modules (3) and the number of lower deposition (4) modules assigned; estimates the fabrication time for each part; selects the scenario, position and orientation combination with lowest estimate fabrication time of the part; generates the sequence of deposition trajectories, simultaneously, for each upper deposition module (3) and each lower deposition module (4) assigned and obtains the lowest estimate for the fabrication time of other part through the available platform modules (2), upper deposition modules (3) and lower deposition modules (4).

2. Generates groups of combinations of fabrication scenarios with diverse positions and orientations for the new parts; iteratively divides the area of each layer of at least one part, by the number of upper deposition modules (3) and the number of lower deposition (4) modules; estimates the fabrication time for each part; selects the scenario, position and orientation combination with lowest estimate fabrication time of the set of parts; generates the sequence of deposition trajectories, simultaneously, for each upper deposition module (3) and each lower deposition module (4) assigned and obtains the lowest estimate for the fabrication time of the set of parts.

In cases in which the fabrication of at least one part finishes while the fabrication of at least one other part is still running, the control subsystem allows for the reallocation of at least one upper deposition module (3) or at least one lower deposition module (4), already available, for the fabrication of at least one remaining part. The method implemented on the computer with the following steps:

- Generates groups of combinations of fabrication scenarios composed by the combination of at least one available platform module (2), of at least one unoccupied upper deposition module (3), of at least one unoccupied lower deposition module (4), assigned to the fabrication of at least one remaining part;
- Divides iteratively the area of each layer of at least on part, by the number of upper deposition modules (3) and the number of lower deposition (4) modules assigned;
- Estimates the fabrication time;
- Selects the fabrication scenario with lowest estimate for remaining parts fabrication time of at least one part; generates the sequence of deposition trajectories, simultaneous, for each upper deposition module (3) and each lower deposition module (4) assigned and obtains the lowest estimate for the remaining fabrication time of the set of parts.

Another characteristic of the computer program of this invention is the ability to start the fabrication of one or more parts while the fabrication of other parts is running. The method implemented executes one of two options for the fabrication of the set of parts: the first allocates the available system resources (modules that are not being used) to the fabrication of one or more new part, minimizing the fabrication time of the new parts; the second allocates the system resources to the fabrication of the group of the new parts and the parts already being fabricated, minimizing the remaining fabrication time of the group of at least two parts.

In the first option, the method implemented on a computer is characterized in that:

a) It generates groups of combinations of fabrication scenarios composed by the combination of the platform module (2) assigned, of at least one unoccupied upper deposition module (3), of at least one unoccupied lower deposition module (4), assigned to the fabrication of at least one remaining part;

b) It divides iteratively the area of each layer of at least on part, by the number of upper deposition modules (3) and the number of lower deposition (4) modules assigned;

c) It estimates the fabrication time for each part and fabrication scenario ($T_{fabrication}$) given by the summation of the fabrication time for each layer, calculated by the intersection of the deposition area calculated using the deposition paths required for the infill and contours of the layer, in which the fabrication time estimated for each upper deposition module (3) and each lower deposition module (4) ($T_{Mi}$) is given by the summation of the time spent on the deposition of the contours ($C_{Mik}$) and on the deposition of the infill ($P_{Mij}$) of each layer in which the estimate of each layer fabrication time ($T_{cp}$) is equal to the largest time estimate of the deposition modules

$$T_{Mi} = \sum_{k=1}^{K} C_{Mi\,k} + \sum_{j=1}^{J} P_{Mi\,j}$$

$$T_{cp} = Max(T_{Mi}, i = 0, \ldots, N)$$

$$T_{fabrication} = \sum_{p=1}^{P} T_{cp} \;;$$

d) It selects the fabrication scenario, position and orientation with lowest estimate for remaining parts fabrication time of at least two parts;

e) It generates the sequence of deposition trajectories, simultaneous, for each upper deposition module (3) and each lower deposition module (4) assigned, starting the deposition by laying down the contours followed by the infill if needed, in which translation movements without deposition are generated to fabricate disjoint deposition areas when needed, and idles periods are generated, when needed, to ensure the nonexistence of collisions between at least one platform module (2), at least one upper deposition module (3) and at least one lower deposition module (4);

f) It optimizes the real fabrication time of the fabrication of the part by searching for multiple sequences of trajectories.

In the second option, the method implemented on a computer is characterized in that:

a) It generates groups of combinations of fabrication scenarios with diverse positions and orientations of the new parts, composed by the combination of at least one platform module (2), of at least one upper deposition module (3), of at least one lower deposition module (4), assigned to the fabrication of at least two parts;

b) It divides iteratively the area of each layer of at least on part, by the number of upper deposition modules (3) and the number of lower deposition (4) modules assigned;

c) It estimates the fabrication time for each part and fabrication scenario ($T_{fabrication}$) given by the summation of the fabrication time for each layer, calculated by the intersection of the deposition area calculated using the deposition paths required for the infill and contours of the layer, in which the fabrication time estimated for each upper deposition module (3) and each lower deposition module (4) ($T_{Mi}$) is given by the summation of the time spent on the deposition of the contours ($C_{Mik}$) and on the deposition of the infill deposition ($P_{Mij}$) of each layer in which the estimate of each layer fabrication time ($T_{cp}$) is equal to the largest time estimate of the deposition modules;

$$T_{Mi} = \sum_{k=1}^{K} C_{Mi\,k} + \sum_{j=1}^{J} P_{Mi\,j}$$

$$T_{cp} = Max(T_{Mi}, i = 0, \ldots, N)$$

$$T_{fabrication} = \sum_{p=1}^{P} T_{cp} \; ;$$

It selects the fabrication scenario, position and orientation with lowest estimate for remaining parts fabrication time of at least two parts;

d) It generates the sequence of deposition trajectories, simultaneous, for each upper deposition module (3) and each lower deposition module (4) assigned, starting the deposition by laying down the contours followed by the infill if needed, in which translation movements without deposition are generated to fabricate disjoint deposition areas when needed, and idles periods are generated, when needed, to ensure the nonexistence of collisions between at least one platform module (2), at least one upper deposition module (3) and at least one lower deposition module (4); e) It optimizes the real fabrication time of at least two parts fabrication by searching for multiple sequences of trajectories.

Another characteristic of the computer program of this invention addresses situations when the fabrication of at least one part ends and the fabrication of at least one part remains, the control subsystem can reallocate at least one upper deposition module (3) or at least one lower deposition module (4), to the fabrication of at least one part that continues its fabrication, minimizing the remaining fabrication time. The method for the generation of the trajectories and deposition instructions is implemented as following:

a) It generates groups of combinations of fabrication scenarios composed by the combination of at least one available platform module (2), of at least one unoccupied upper deposition module (3), of at least one unoccupied lower deposition module (4), assigned to the fabrication of at least one remaining part;

b) It divides iteratively the area of each layer of at least on part, by the number of upper deposition modules (3) and the number of lower deposition (4) modules assigned;

c) It estimates the fabrication time for each part and fabrication scenario ($T_{fabrication}$) given by the summation of the fabrication time for each layer, calculated by the intersection of the deposition area calculated using the deposition paths required for the infill and contours of the layer, in which the fabrication time estimated for each upper deposition module (3) and each lower deposition module (4) ($T_{Mi}$) is given by the summation of the time spent on the deposition of the contours ($C_{Mi\,k}$) and on the deposition of the infill ($P_{Mi\,j}$) of each layer in which the estimate of each layer fabrication time ($T_{cp}$) is equal to the largest time estimate of the deposition modules;

$$T_{Mi} = \sum_{k=1}^{K} C_{Mi\,k} + \sum_{j=1}^{J} P_{Mi\,j}$$

$$T_{cp} = Max(T_{Mi}, i = 0, \ldots, N)$$

$$T_{fabrication} = \sum_{p=1}^{P} T_{cp} \; ;$$

d) It selects the combination of fabrication scenario with lowest estimate for remaining parts fabrication time of at least one part;

e) It generates a sequence of deposition trajectories, simultaneous, for each upper deposition module (3) and each lower deposition module (4) assigned, starting the deposition by laying down the contours followed by the infill if needed, in which translation movements without deposition are generated to fabricate disjoint deposition areas when needed, and idles periods are generated, when needed, to ensure the nonexistence of collisions between at least one platform module (2), at least one upper deposition module (3) and at least one lower deposition module (4) during the fabrication; f) It optimizes the real fabrication time of the part fabrication by searching for multiple sequences of trajectories.

The present additive manufacturing system can fabricate larger parts without increasing, in the same proportion, its fabrication time. Be "T" the fabrication time of a certain part using a conventional system, the fabrication time achieved by this modular system, using "n" upper deposition modules (3) and lower deposition modules (4), is "T/n" apart from the extra time increase due to the longer trajectories required to avoid collision between the upper deposition heads (13) and the lower deposition heads (14) .

The cases in which the parts to be fabricated have at least one overhang surface that requires the deposition of an auxiliary material (support), the present invention enables the control of at least one platform module (2) to be positioned at the height of that surface, by starting its movement at different time from the other platform modules (2) where the lower layers are laid down, reducing the amount of support material required and also the fabrication time of these parts.

Since at least two platform modules (2), at least two upper deposition modules (3) and two lower deposition modules (4) are mechanically independent one from another, the system is able to, in some cases, start the fabrication of a new set of parts without stopping or disturbing a fabrication already running, requiring that at least one platform module (2) and at least one upper deposition module (3) or at least one lower deposition module (4) are available.

The fact that each platform module (2), each upper deposition module (3) and each lower deposition module (4) is removable and interchangeable allows for the distribution of these modules to be adapted to the geometry of the parts to be fabricated.

Given the maximum dimensions of the parts to be fabricated, for a given main rigid frame (1), both the number of upper deposition modules (3) and number of lower deposition modules (4) and also the number of platform modules (2) is changeable and the can be positioned and distributed inside the main rigid frame (1) to achieve the most suitable configuration for these parts fabrications.

Since each platform module (2), each upper deposition module (3) and each lower deposition module (4) being removable, they can be used in other similar systems.

The present additive manufacturing system, is able to fabricate multiple parts of smaller dimensions, at the same time or not, because the platform modules (2), the upper deposition modules (3) and the lower deposition modules (4) that are not in use, are controlled to be available for the fabrication of new parts if there is enough space on the available deposition platforms (6).

In one embodiment, the additive manufacturing system proposed in the present invention, can be used with different technologies of material deposition along a trajectory, in simultaneous or not, because the control of each upper deposition module (3), each lower deposition module (4) and each platform deposition module (2) is made independently.

**Claims**

1. Modular additive manufacturing system **characterized in that** it comprises a main rigid frame (1) and:

    a) A deposition subsystem, composed of at least one upper deposition module (3) and at least one lower deposition module (4), mounted on at least one pair of upper rails (5), wherein,

    the upper deposition module (3) comprises an upper actuation mechanism (9) assembled to an upper gantry (10), which in turn is assembled to a lower rail (17), which supports a lower actuation mechanism (12) and where an upper deposition head (13) moves, comprising at least one deposition nozzle (18); and
    the lower deposition module (4) comprises an upper actuation mechanism (9) assembled to a lower gantry (11), which in turn is assembled to a lower rail (17), which supports a lower actuation mechanism (12) and where a lower deposition head (14) moves, comprising at least one deposition nozzle (18);

    b) A support subsystem, composed of at least one platform module (2), connected to the main rigid frame (1) using fixation elements (19);
    c) A control subsystem for the control of the deposition subsystem and the support subsystem.

2. System, according to claim 1, **characterized in that** the upper deposition module (3), the lower deposition module (4) and the platform module (2) are removable and interchangeable.

3. System, according to claim 1, **characterized in that** the upper deposition module (3) and the lower deposition module (4) are assembled on at least one pair of upper rails (5), alternately.

4. System, according to claim 3, **characterized in that** the upper deposition module (3) and the lower deposition module (4) are assembled in only one pair of upper rails (5).

5. System, according to claim 1, **characterized in that** the platform module (2) comprises a vertical actuator (8) that supports a deposition platform (6), in which is assembled at least one linear rod (7).

6. System, according with claim 1, **characterized in that** the control subsystem is used for the control of each platform module (2), of each upper deposition module (3) and each lower deposition module (4), in a coordinated way.

7. System, according to claim 1, **characterized in that** the control subsystem is used on the generation and control of trajectories for the deposition of material for the fabrication.

8. Computer implemented method that uses the modular additive manufacturing system defined in claims 1 to 7, **characterized in that**:

    a) It generates groups of combinations of fabrication scenarios with diverse positions and orientations, composed of the combination of at least one platform module (2), of at least one upper deposition module (3), of at least one lower deposition module (4), assigned to the fabrication of at least one part;

b) It divides iteratively the area of each layer of at least on part, by the number of upper deposition modules (3) and the number of lower deposition (4) modules assigned;

c) It estimates the fabrication time for each part and fabrication scenario ($T_{fabrication}$) given by the summation of the fabrication time for each layer, calculated by the intersection of the deposition area calculated using the deposition paths required for the infill and contours of the layer, in which the fabrication time estimated for each upper deposition module (3) and each lower deposition module (4) ($T_{Mi}$) is given by the summation of the time spent on the deposition of contours ($C_{Mik}$) and on the deposition of the infill ($P_{Mij}$) of each layer in which the estimate of each layer fabrication time ($T_{cp}$) is equal to the largest time estimate of the deposition modules

$$T_{Mi} = \sum_{k=1}^{K} C_{Mi\,k} + \sum_{j=1}^{J} P_{M_i}$$

$$T_{cp} = Max(T_{Mi}, i = 0, ..., I$$

$$T_{fabrication} = \sum_{p=1}^{P} T_{cp} ;$$

d) It selects the fabrication scenario, position orientation with lowest estimate for the fabrication time of the part;

e) It generates the sequence of deposition trajectories, simultaneous, for each upper deposition module (3) and each lower deposition module (4) assigned, starting the deposition by laying down the contours followed by the infill if needed, in which translation movements without deposition are generated to fabricate disjoint deposition areas when needed, and idles periods are generated, when needed, to ensure the nonexistence of collisions between at least one platform module (2), at least one upper deposition module (3) and at least one lower deposition module (4) during the fabrication;

f) It optimizes the real fabrication time of the parts fabrication by searching for multiple sequences of trajectories.

9. Method, according to claim 8, in cases when is intended to start the fabrication of at least one new part while the fabrication of at least one other part is still running, is **characterized in that**:

a) It generates groups of combinations of fabrication scenarios with diverse positions and orientations, composed of the combination of at least one unoccupied platform module (2), of at least one unoccupied upper deposition module (3), of at least one unoccupied lower deposition module (4), assigned to the fabrication of at least one new part;

b) It divides iteratively the area of each layer of at least on part by the number of upper deposition modules (3) and the number of lower deposition (4) modules assigned;

c) It estimates the fabrication time for each part and fabrication scenario ($T_{fabrication}$) given by the summation of the fabrication time for each layer, calculated by the intersection of the deposition area calculated using the deposition paths required for the infill and contours of the layer, in which the fabrication time estimated for each upper deposition module (3) and each lower deposition module (4) ($T_{Mi}$) is given by the summation of the time spent on the deposition of the contours ($C_{Mi\,k}$) and on the deposition of the infill ($P_{Mi\,j}$) of each layer in which the estimate of each layer fabrication time ($T_{cp}$) is equal to the largest time estimate of the deposition modules

$$T_{Mi} = \sum_{k=1}^{K} C_{Mi\,k} + \sum_{j=1}^{J} P_{Mi\,j}$$

$$T_{cp} = Max(T_{Mi}, i = 0, ..., N)$$

$$T_{fabrication} = \sum_{p=1}^{P} T_{cp} ;$$

d) It selects the fabrication scenario, position orientation with lowest estimate for the fabrication time of the part;

e) It generates the sequence of deposition trajectories, simultaneously, for each upper deposition module (3) and each lower deposition module (4) assigned, starting the deposition by laying down the contours followed by the infill if needed, in which translation movements without deposition are generated to fabricate disjoint deposition areas when needed, and idles periods are generated, when needed, to ensure the nonexistence of collisions between at least one platform module (2), at least one upper deposition module (3) and at least one lower deposition module (4) during the fabrication;

f) It optimizes the real fabrication time of the parts fabrication by searching for multiple sequences of trajectories.

10. Method, according to claim 8, in cases when is intended to start the fabrication of at least one new part while the fabrication of at least one other part is still running, is **characterized in that**:

a) It generates groups of combinations of fabrication scenarios with diverse positions and orientations of the new parts, composed of the combination of at least one platform module (2), of at least one upper deposition module (3), of at least one lower deposition module (4), assigned to the fabrication of at least two parts;
b) It divides iteratively the area of each layer of at least on part, by the number of upper deposition modules (3) and the number of lower deposition (4) modules assigned;
c) It estimates the fabrication time for each part and fabrication scenario ($T_{fabrication}$) given by the summation of the fabrication time for each layer, calculated by the intersection of the deposition area calculated using the deposition paths required for the infill and contours of the layer, in which the fabrication time estimated for each upper deposition module (3) and each lower deposition module (4) ($T_{Mi}$) is given by the summation of the time spent on the deposition of the contours ($C_{Mi\,k}$) and on the deposition of the infill ($P_{Mi\,j}$) of each layer in which the estimate of each layer fabrication time ($T_{cp}$) is equal to the largest time estimate of the deposition modules

$$T_{Mi} = \sum_{k=1}^{K} C_{Mi\,k} + \sum_{j=1}^{J} P_{Mi\,j}$$

$$T_{cp} = Max(T_{Mi}, i = 0, \dots, N)$$

$$T_{fabrication} = \sum_{p=1}^{p} T_{cp} \quad ;$$

d) It selects the fabrication scenario, position and orientation with lowest estimate for remaining parts fabrication time of at least two parts;
e) It generates the sequence of deposition trajectories, simultaneous, for each upper deposition module (3) and each lower deposition module (4) assigned, starting the deposition by laying down the contours followed by the infill if needed, in which translation movements without deposition are generated to fabricate disjoint deposition areas when needed, and idles periods are generated, when needed, to ensure the nonexistence of collisions between at least one platform module (2), at least one upper deposition module (3) and at least one lower deposition module (4) during the fabrication;
f) It optimizes the real fabrication time of at least two parts fabrication by searching for multiple sequences of trajectories.

11. Method, according to claim 8, in cases when the fabrication of at least one part finishes while the fabrication of at least one other part is still running, is **characterized in that**:

a) It generates groups of combinations of fabrication scenarios composed by the combination of at least one available platform module (2), of at least one unoccupied upper deposition module (3), of at least one unoccupied lower deposition module (4), assigned to the fabrication of at least one remaining part;
b) It divides iteratively the area of each layer of at least on part, by the number of upper deposition modules (3) and the number of lower deposition (4) modules assigned;
c) It estimates the fabrication time for each part and fabrication scenario ($T_{fabrication}$) given by the summation of the fabrication time for each layer, calculated by the intersection of the deposition area calculated using the deposition paths required for the infill and contours of the layer, in which the fabrication time estimated for each upper deposition module (3) and each lower deposition module (4) ($T_{Mi}$) is given by the summation of the time spent on the deposition of contours ($C_{Mi\,k}$) and on the deposition of the infill ($P_{Mi\,j}$) of each layer in which the estimate of each layer fabrication time ($T_{cp}$) is equal to the largest time estimate of the deposition modules

$$T_{Mi} = \sum_{k=1}^{K} C_{Mi\,k} + \sum_{j=1}^{J} P_{Mi\,j}$$

d)

$$T_{cp} = Max(T_{Mi}, i = 0, \dots, N)$$

$$T_{fabrication} = \sum_{p=1}^{p} T_{cp} \quad ;$$

d) It selects the fabrication scenario with lowest estimate for remaining parts fabrication time of at least one part;
e) It generates the sequence of deposition trajectories, simultaneous, for each upper deposition module (3) and each lower deposition module (4) assigned, starting the deposition by laying down the contours followed by the infill if needed, in which translation movements without deposition are generated to fabricate disjoint deposition areas when needed, and idles periods are generated, when needed, to ensure the nonexistence of collisions between at least one platform module (2), at least one upper deposition module (3) and at least one lower deposition module (4) during the fabrication;

f) It optimizes the real fabrication time of the part fabrication by searching for multiple sequences of trajectories.

**Patentansprüche**

1. Modulares additives Fertigungssystem, **dadurch gekennzeichnet, dass** es einen starren Hauptrahmen (1) umfasst und:

   a) Ein Ablagerungs-Subsystem, aus mindestens einem oberen Ablagerungsmodul (3) und mindestens einem unteren Ablagerungsmodul (4) zusammengesetzt, auf mindestens einem oberen Schienenpaar (5) montiert, worin,

   das obere Ablagerungsmodul (3) einen oberen Betätigungsmechanismus (9) an einem oberen Gerüst (10) montiert, umfasst, welches wiederum an eine untere Schiene (17) montiert ist, welches ein unteren Betätigungsmechanismus (12) stützt und wo sich ein oberer Ablagekopf (13) bewegt, mindestens eine Ablagerungsdüse (18) umfasst; und
   das untere Ablagerungsmodul (4) einen oberen Betätigungsmechanismus (9) an einem unteren Gerüst (11) montiert, umfasst, welches wiederum an eine untere Schiene (17) montiert ist, welches ein unteren Betätigungsmechanismus (12) stützt und wo sich ein unterer Ablagekopf (14) bewegt, mindestens eine Ablagerungsdüse (18) umfasst;

   b) Ein Stützungs-Subsystem, aus mindestens einem Plattformmodul (2) zusammengesetzt, der an den starren Hauptrahmen (1) durch Fixierungselemente (19) befestigt ist;
   c) Ein Steuerungs-Subsystem für die Steuerung des Ablagerungs-Subsystems und des Stützungs-Subsystems.

2. System nach Anspruch 1, **dadurch gekennzeichnet, dass** das obere Ablagerungsmodul (3), das untere Ablagerungsmodul (4) und das Plattformmodul (2) abnehmbar und austauschbar sind.

3. System nach Anspruch 1, **dadurch gekennzeichnet, dass** das obere Ablagerungsmodul (3) und das untere Ablagerungsmodul (4), abwechselnd, auf mindestens einem oberen Schienenpaar (5) montiert sind.

4. System nach Anspruch 3, **dadurch gekennzeichnet, dass** das obere Ablagerungsmodul (3) und das untere Ablagerungsmodul (4) nur an einem oberen Schienenpaar (5) montiert sind.

5. System nach Anspruch 1, **dadurch gekennzeichnet, dass** das Plattformmodul (2) einen Vertikalantrieb (8) umfasst, der eine Ablageplattform (6) stützt, an der mindestens eine lineare Stange (7) montiert ist.

6. System nach Anspruch 1, **dadurch gekennzeichnet, dass** das Steuerungs-Subsystem für die Steuerung von jedem Plattformmodul (2), von jedem oberen Ablagerungsmodul (3) und von jedem unteren Ablagerungsmodul (4) auf koordinierte Weise genutzt wird.

7. System nach Anspruch 1, **dadurch gekennzeichnet, dass** das Steuerungs-Subsystem für die Erzeugung und Steuerung von Laufbahnen für die Ablagerung von Material für die Herstellung genutzt wird .

8. Computerimplementiertes Verfahren, das das in den Ansprüchen 1 bis 7 definierte modulare additive Fertigungssystem verwendet, **dadurch gekennzeichnet, dass**:

   a) Es Kombinationsgruppen von Herstellungsszenarien mit verschiedenen Positionen und Ausrichtungen, zusammengesetzt aus der Kombination von mindestens einem Plattformmodul (2), von mindestens einem oberen Ablagerungsmodul (3), von mindestens einem unteren Ablagerungsmodul (4), die der Herstellung von mindestens einem Teil zugeordnet sind, erzeugt;
   b) Es iterativ die Fläche jeder Schicht von mindestens einem Teil durch die Anzahl der zugeordneten oberen Ablagerungsmodule (3) und die Anzahl der unteren Ablagerungsmodule (4) teilt;
   c) Es die Fertigungszeit für jedes Teil und Herstellungsszenarium schätzt ($T_{fabrication}$), ergeben durch die Summe der Fertigungszeit für jede Schicht, kalkuliert durch die Schnittpunkte der Ablagefläche, kalkuliert durch die Nutzung der Ablagerungspfade, die für die Ausfüllung und Konturen der Schicht benötigt werden, bei der die geschätzte Fertigungszeit für jedes obere Ablagerungsmodul (3) und jedes untere Ablagerungsmodul (4) ($T_{Mi}$) durch die Summe des Zeitaufwandes für die Ablage von Konturen ($C_{Mi\,k}$) und die Ablage der Ausfüllung ($P_{Mi\,j}$) jeder Schicht ergeben wird, bei dem die geschätzte Fertigungszeit für jede Schicht ($T_{cp}$) der größte Zeitschätzung der Ablagerungsmodul gleicht

$$T_{Mi} = \sum_{k=1}^{K} C_{Mi\,k} + \sum_{j=1}^{J} P_{Mi\,j}$$

$$T_{cp} = Max(T_{Mi}, i = 0, ..., N)$$

$$T_{fabrication} = \sum_{p=1}^{P} T_{cp}\;;$$

d) Es das Herstellungsszenarium, Position und Ausrichtung mit der geringsten Schätzung der Fertigungszeit des Teils auswählt;

e) Es gleichzeitig die Abfolge von Ablagerungsbahnen für jedes zugeordnete obere Ablagerungsmodul (3) und jedes zugeordnete untere Ablagerungsmodul (4) erzeugt, indem die Ablagerung mit dem Ablegen der Konturen beginnt und, falls erforderlich, von der Ausfüllung gefolgt wird, bei dem Translationsbewegungen ohne Ablagerung erzeugt werden, um bei Bedarf getrennte Ablagerungsbereiche herzustellen, und Stillstandzeiten bei Bedarf erzeugt werden, um das Nichtvorhandensein von Kollisionen zwischen mindestens einem Plattformmodul (2), mindestens einem oberen Ablagerungsmodul (3), und mindestens einem unteren Ablagerungsmodul (4) während der Herstellung, zu gewährleisten;

f) Es die tatsächliche Fertigungszeit der Teileherstellung optimiert, indem es mehrere Bahnabfolgen sucht.

9. Verfahren nach Anspruch 8, in Fällen, in denen vorgesehen ist, die Herstellung von mindestens einem neuen Teil zu starten, während die Herstellung von mindestens einem anderen Teil noch läuft, **dadurch gekennzeichnet, dass**:

a) Es Kombinationsgruppen von Herstellungsszenarien mit verschiedenen Positionen und Ausrichtungen, zusammengesetzt aus der Kombination von mindestens einem unbesetzten Plattformmodul (2), von mindestens einem unbesetzten oberen Ablagerungsmodul (3), von mindestens einem unbesetzten unteren Ablagerungsmodul (4) die der Herstellung von mindestens einem neuen Teil zugeordnet sind, erzeugt;

b) Es iterativ die Fläche jeder Schicht von mindestens einem Teil durch die Anzahl der zugeordneten oberen Ablagerungsmodulen (3) und die Anzahl der unteren Ablagerungsmodulen (4) teilt;

c) Es die Fertigungszeit für jedes Teil und Herstellungsszenarium schätzt ($T_{fabrication}$), ergeben durch die Summe der Fertigungszeit für jede Schicht, kalkuliert durch die Schnittpunkte der Ablagefläche, kalkuliert durch die Nutzung der Ablagerungspfade, die für die Ausfüllung und Konturen der Schicht benötigt werden, bei der die geschätzte Fertigungszeit für jedes obere Ablagerungsmodul (3) und jedes untere Ablagerungsmodul (4) ($T_{Mi}$) durch die Summe des Zeitaufwandes für die Ablage von Konturen ($C_{Mi\,k}$) und die Ablage der Ausfüllung ($P_{Mi\,j}$) jeder Schicht ergeben wird, bei dem die geschätzte Fertigungszeit für jede Schicht ($T_{cp}$) der größte Zeitschätzung der Ablagerungsmodul gleicht

$$T_{Mi} = \sum_{k=1}^{K} C_{Mi\,k} + \sum_{j=1}^{J} P_{Mi\,j}$$

$$T_{cp} = Max(T_{Mi}, i = 0, ..., N)$$

$$T_{fabrication} = \sum_{p=1}^{P} T_{cp}\;;$$

d) Es das Herstellungsszenarium, Position und Ausrichtung mit der geringsten Schätzung der Fertigungszeit des Teils auswählt;

e) Es gleichzeitig die Abfolge von Ablagerungsbahnen für jedes zugeordnete obere Ablagerungsmodul (3) und jedes zugeordnete untere Ablagerungsmodul (4) erzeugt, indem die Ablagerung mit dem Ablegen der Konturen beginnt und, falls erforderlich, von der Ausfüllung gefolgt wird, bei dem Translationsbewegungen ohne Ablagerung erzeugt werden, um bei Bedarf getrennte Ablagerungsbereiche herzustellen, und Stillstandzeiten bei Bedarf erzeugt werden, um das Nichtvorhandensein von Kollisionen zwischen mindestens einem Plattformmodul (2), mindestens einem oberen Ablagerungsmodul (3), und mindestens einem unteren Ablagerungsmodul (4) während der Herstellung, zu gewährleisten;

f) Es die tatsächliche Fertigungszeit der Teileherstellung optimiert, indem es mehrere Bahnabfolgen sucht.

10. Verfahren nach Anspruch 8, in Fällen, in denen es vorgesehen ist, die Herstellung von mindestens einem neuen Teil zu starten, während die Herstellung von mindestens einem anderen Teil noch läuft, **dadurch gekennzeichnet, dass**:

a) Es Kombinationsgruppen von Herstellungsszenarien mit verschiedenen Positionen und Ausrichtungen der neuen Teile, zusammengesetzt aus der Kombination von mindestens einem Plattformmodul (2), von mindestens einem oberen Ablagerungsmodul (3), von mindestens einem unteren Ablagerungsmodul (4), die der Herstellung von mindestens zwei Teilen zugeordnet sind, erzeugt;

b) Es iterativ die Fläche jeder Schicht von mindestens einem Teil durch die Anzahl der zugeordneten oberen Ablagerungsmodulen (3) und die Anzahl der unteren Ablagerungsmodulen (4) teilt;

c) Es die Fertigungszeit für jedes Teil und Herstellungsszenarium schätzt ($T_{fabrication}$), ergeben durch die Summe der Fertigungszeit für jede Schicht, kalkuliert durch die Schnittpunkte der Ablagefläche, kalkuliert durch die Nutzung der Ablagerungspfade, die für die Ausfüllung und Konturen der Schicht benötigt werden, bei der die geschätzte Fertigungszeit für jedes obere Ablagerungsmodul (3) und jedes untere Ablagerungsmodul (4) ($T_{Mi}$) durch die Summe des Zeitaufwandes für die Ablage von Konturen ($C_{Mi\,k}$) und die Ablage der Ausfüllung ($P_{Mi\,j}$) jeder Schicht ergeben wird, bei dem die geschätzte Fertigungszeit für jede Schicht ($T_{cp}$) der größte Zeitschätzung der Ablagerungsmodul gleicht

$$T_{Mi} = \sum_{k=1}^{K} C_{Mi\,k} + \sum_{j=1}^{J} P_{Mi\,j}$$

$$T_{cp} = Max(T_{Mi}, i = 0, ..., N)$$

$$T_{fabrication} = \sum_{p=1}^{P} T_{cp} \, ;$$

d) Es das Herstellungsszenario, die Position und die Ausrichtung mit der geringsten Schätzung für die verbleibende Teilefertigungszeit von mindestens zwei Teilen auswählt;

e) Es gleichzeitig die Abfolge von Ablagerungsbahnen für jedes zugeordnete obere Ablagerungsmodul (3) und jedes zugeordnete untere Ablagerungsmodul (4) erzeugt, indem die Ablagerung mit dem Ablegen der Konturen beginnt und, falls erforderlich, von der Ausfüllung gefolgt wird, bei dem Translationsbewegungen ohne Ablagerung erzeugt werden, um bei Bedarf getrennte Ablagerungsbereiche herzustellen, und Stillstandzeiten bei Bedarf erzeugt werden, um das Nichtvorhandensein von Kollisionen zwischen mindestens einem Plattformmodul (2), mindestens einem oberen Ablagerungsmodul (3), und mindestens einem unteren Ablagerungsmodul (4) während der Herstellung, zu gewährleisten;

f) Es die tatsächliche Fertigungszeit von mindestens zwei Teilen optimiert, indem es mehrere Bahnabfolgen sucht.

11. Verfahren nach Anspruch 8, in Fällen, in denen die Herstellung mindestens eines Teils abgeschlossen ist, während die Herstellung von mindestens einem anderen Teil noch läuft, **dadurch gekennzeichnet, dass**:

a) Es Kombinationsgruppen von Herstellungsszenarien zusammengesetzt aus der Kombination von mindestens einem verfügbaren Plattformmodul (2), von mindestens einem unbesetzten oberen Ablagerungsmodul (3), von mindestens einem unbesetzten unteren Ablagerungsmodul (4), die der Herstellung von mindestens einem verbleibenden Teil zugeordnet sind, erzeugt;

b) Es iterativ die Fläche jeder Schicht von mindestens einem Teil durch die Anzahl der zugeordneten oberen Ablagerungsmodulen (3) und die Anzahl der unteren Ablagerungsmodulen (4) teilt;

c) Es die Fertigungszeit für jedes Teil und Herstellungsszenarium schätzt ($T_{fabrication}$), ergeben durch die Summe der Fertigungszeit für jede Schicht, kalkuliert durch die Schnittpunkte der Ablagefläche, kalkuliert durch die Nutzung der Ablagerungspfade, die für die Ausfüllung und Konturen der Schicht benötigt werden, bei der die geschätzte Fertigungszeit für jedes obere Ablagerungsmodul (3) und jedes untere Ablagerungsmodul (4) ($T_{Mi}$) durch die Summe des Zeitaufwandes für die Ablage von Konturen ($C_{Mi\,k}$) und die Ablage der Ausfüllung ($P_{Mi\,j}$) jeder Schicht ergeben wird, bei dem die geschätzte Fertigungszeit für jede Schicht ($T_{cp}$) der größte Zeitschätzung der Ablagerungsmodul gleicht

$$T_{Mi} = \sum_{k=1}^{K} C_{Mi\,k} + \sum_{j=1}^{J} P_{Mi\,j}$$

$$T_{cp} = Max(T_{Mi}, i = 0, ..., N)$$

$$T_{fabrication} = \sum_{p=1}^{P} T_{cp} \, ;$$

d) Es das Herstellungsszenario mit der geringsten Schätzung für die verbleibende Teilefertigungszeit von mindestens einem Teil auswählt;

e) Es gleichzeitig die Abfolge von Ablagerungsbahnen für jedes zugeordnete obere Ablagerungsmodul (3) und jedes zugeordnete untere Ablagerungsmodul (4) erzeugt, indem die Ablagerung mit dem Ablegen der Konturen beginnt und, falls erforderlich, von der Ausfüllung gefolgt wird, bei dem Translationsbewegungen ohne Ablagerung erzeugt werden, um bei Bedarf getrennte Ablagerungsbereiche herzustellen, und Stillstandzeiten bei Bedarf erzeugt werden, um das Nichtvorhandensein von Kollisionen zwischen mindestens einem Plattformmodul (2), mindestens einem oberen Ablagerungsmodul (3), und mindestens einem unteren Ablagerungsmodul (4) während der Herstellung, zu gewährleisten;

f) Es die tatsächliche Fertigungszeit der Teileherstellung optimiert, indem es mehrere Bahnabfolgen sucht.

## Revendications

1. Système modulaire de fabrication additive **caractérisé en ce qu'**il comprend un cadre principal rigide (1) et:

   a) Un sous-système de dépôt, composé d'au moins un module de dépôt supérieur (3) et d'au moins un module de dépôt inférieur (4), monté sur au moins une paire de rails supérieurs (5), dans lequel,

   le module de dépôt supérieur (3) comprend un mécanisme d'actionnement supérieur (9) assemblé à un portique supérieur (10), qui à son tour est assemblé à un rail inférieur (17), qui supporte un mécanisme d'actionnement inférieur (12) et où se déplace une tête de dépôt supérieure (13), comprenant au moins une buse de dépôt (18); et
   le module de dépôt inférieur (4) comprend un mécanisme d'actionnement supérieur (9) assemblé à un portique inférieur (11), qui à son tour est assemblé à un rail inférieur (17), qui supporte un mécanisme d'actionnement inférieur (12) et où se déplace une tête de dépôt inférieure (14), comprenant au moins une buse de dépôt (18);

   b) Un sous-système de support, composé d'au moins un module de plateforme (2), relié au cadre principal rigide (1) à l'aide d'éléments de fixation (19);

   c) Un sous-système de commande pour la commande du sous-système de dépôt et du sous-système de support.

2. Système selon la revendication 1, **caractérisé en ce que** le module de dépôt supérieur (3), le module de dépôt inférieur (4) et le module de plateforme (2) sont amovibles et interchangeables.

3. Système selon la revendication 1, **caractérisé en ce que** le module de dépôt supérieur (3) et le module de dépôt inférieur (4) sont assemblés sur au moins une paire de rails supérieurs (5), alternativement.

4. Système selon la revendication 3, **caractérisé en ce que** le module de dépôt supérieur (3) et le module de dépôt inférieur (4) sont assemblés en une seule paire de rails supérieurs (5).

5. Système selon la revendication 1, **caractérisé en ce que** le module de plateforme (2) comprend un actionneur vertical (8) qui supporte une plateforme de dépôt (6), dans laquelle est assemblée au moins une tige linéaire (7).

6. Système selon la revendication 1, **caractérisé en ce que** le sous-système de commande est utilisé pour la commande de chaque module de plateforme (2), de chaque module de dépôt supérieur (3) et de chaque module de dépôt inférieur (4), d'une manière coordonnée.

7. Système selon la revendication 1, **caractérisé en ce que** le sous-système de commande est utilisé pour la génération et la commande de trajectoires pour le dépôt de matériau pour la fabrication.

8. Procédé mis en œuvre par ordinateur qui utilise le système modulaire de fabrication additive défini dans les revendications 1 à 7, **caractérisé en ce que**:

   a) Il génère des groupes de combinaisons de scénarios de fabrication avec diverses positions et orientations, composés de la combinaison d'au moins un module de plateforme (2), d'au moins un module de dépôt supérieur (3), d'au moins un module de dépôt inférieur (4), attribués à la fabrication d'au moins une pièce;
   b) Il divise itérativement l'aire de chaque couche d'au moins une pièce, par le nombre de modules de dépôt supérieurs (3) et le nombre de modules de dépôt inférieurs (4) attribués;
   c) Il estime le temps de fabrication pour chaque pièce et scénario de fabrication ($T_{fabrication}$) donné par la somme du temps de fabrication pour chaque couche, calculé par l'intersection de la surface de dépôt, calculée en utilisant les chemins de dépôt nécessaires pour le remplissage et les contours de la couche, dans lequel le temps de fabrication estimé pour chaque module de dépôt supérieur (3) et chaque module de dépôt inférieur (4) ($T_{Mi}$) est donné par la somme du temps consacré au dépôt des contours ($C_{Mi\,k}$) et au dépôt du remplissage ($P_{Mi\,j}$) de chaque couche, dans laquelle l'estimation de temps de fabrication de chaque couche ($T_{cp}$) est égale à la plus grande estimation de temps des modules de dépôt

$$T_{Mi} = \sum_{k=1}^{K} C_{Mi\,k} + \sum_{j=1}^{J} P_{Mi\,j}$$

$$T_{cp} = Max(T_{Mi}, i = 0, ..., N)$$

$$T_{fabrication} = \sum_{p=1}^{P} T_{cp} \, ;$$

d) Il sélectionne le scénario de fabrication, la position et l'orientation avec la plus petite estimation pour le temps de fabrication de la pièce;
e) Il génère la séquence de trajectoires de dépôt, simultanées, pour chaque module de dépôt supérieur (3) et chaque module de dépôt inférieur (4) attribué, en commençant le dépôt par la pose des contours suivie du remplissage, si nécessaire, dans lequel des mouvements de translation sans dépôt sont générés pour fabriquer des surfaces de dépôt disjointes, lorsque nécessaires, et des périodes d'inactivité sont générées, lorsque nécessaires, pour assurer l'inexistence de collisions entre au moins un module de plateforme (2), au moins un module de dépôt supérieur (3) et au moins un module de dépôt inférieur (4), pendant la fabrication;
f) Il optimise le temps réel de fabrication de la fabrication des pièces, en recherchant de multiples séquences de trajectoires.

9. Procédé selon la revendication 8 où, dans les cas où il est prévu de commencer la fabrication d'au moins une nouvelle pièce alors que la fabrication d'au moins une autre pièce est toujours en cours, il est **caractérisé en ce que**:

a) Il génère des groupes de combinaisons de scénarios de fabrication avec diverses positions et orientations, composés de la combinaison d'au moins un module de plateforme inoccupé (2), d'au moins un module de dépôt supérieur inoccupé (3), d'au moins un module de dépôt inférieur inoccupé (4), attribués à la fabrication d'au moins une nouvelle pièce;
b) Il divise itérativement l'aire de chaque couche d'au moins une pièce, par le nombre de modules de dépôt supérieurs (3) et le nombre de modules de dépôt inférieurs (4) attribués;
c) Il estime le temps de fabrication pour chaque pièce et scénario de fabrication ($T_{fabrication}$) donné par la somme du temps de fabrication pour chaque couche, calculé par l'intersection de la surface de dépôt, calculée en utilisant les chemins de dépôt nécessaires pour le remplissage et les contours de la couche, dans lequel le temps de fabrication estimé pour chaque module de dépôt supérieur (3) et chaque module de dépôt inférieur (4) ($T_{Mi}$) est donné par la somme du temps consacré au dépôt des contours ($C_{Mi\,k}$) et au dépôt du remplissage ($P_{Mi\,j}$) de chaque couche, dans laquelle l'estimation de temps de fabrication de chaque couche ($T_{cp}$) est égale à la plus grande estimation de temps des modules de dépôt

$$T_{Mi} = \sum_{k=1}^{K} C_{Mi\,k} + \sum_{j=1}^{J} P_{Mi\,j}$$

$$T_{cp} = Max(T_{Mi}, i = 0, ..., N)$$

$$T_{fabrication} = \sum_{p=1}^{P} T_{cp} \, ;$$

d) Il sélectionne le scénario de fabrication, la position et l'orientation avec la plus petite estimation pour le temps de fabrication de la pièce;
e) Il génère la séquence de trajectoires de dépôt, simultanées, pour chaque module de dépôt supérieur (3) et chaque module de dépôt inférieur (4) attribué, en commençant le dépôt par la pose des contours suivie du remplissage, si nécessaire, dans lequel des mouvements de translation sans dépôt sont générés pour fabriquer des surfaces de dépôt disjointes, lorsque nécessaires, et des périodes d'inactivité sont générées, lorsque nécessaires, pour assurer l'inexistence de collisions entre au moins un module de plateforme (2), au moins un module de dépôt supérieur (3) et au moins un module de dépôt inférieur (4), pendant la fabrication;
f) Il optimise le temps réel de fabrication de la fabrication des pièces, en recherchant de multiples séquences de trajectoires.

10. Procédé selon la revendication 8 où, dans les cas où il est prévu de commencer la fabrication d'au moins une nouvelle pièce alors que la fabrication d'au moins une autre pièce est toujours en cours, il est **caractérisé en ce que**:

a) Il génère des groupes de combinaisons de scénarios de fabrication avec diverses positions et orientations des nouvelles pièces, composés de la combinaison d'au moins un module de plateforme (2), d'au moins un module de dépôt supérieur (3), d'au moins un module de dépôt inférieur (4), attribués à la fabrication d'au moins deux pièces;

b) Il divise itérativement l'aire de chaque couche d'au moins une pièce, par le nombre de modules de dépôt supérieurs (3) et le nombre de modules de dépôt inférieurs (4) attribués;

c) Il estime le temps de fabrication pour chaque pièce et scénario de fabrication ($T_{fabrication}$) donné par la somme du temps de fabrication pour chaque couche, calculé par l'intersection de la surface de dépôt, calculée en utilisant les chemins de dépôt nécessaires pour le remplissage et les contours de la couche, dans lequel le temps de fabrication estimé pour chaque module de dépôt supérieur (3) et chaque module de dépôt inférieur (4) ($T_{Mi}$) est donné par la somme du temps consacré au dépôt des contours ($C_{Mi\,k}$) et au dépôt du remplissage ($P_{mi\,j}$) de chaque couche, dans laquelle l'estimation de temps de fabrication de chaque couche ($T_{cp}$) est égale à la plus grande estimation de temps des modules de dépôt

$$T_{Mi} = \sum_{k=1}^{K} C_{Mi\,k} + \sum_{j=1}^{J} P_{Mi\,j}$$

$$T_{cp} = Max(T_{Mi}, i = 0, ..., N)$$

$$T_{fabrication} = \sum_{p=1}^{P} T_{cp} \; ;$$

d) Il sélectionne le scénario de fabrication, la position et l'orientation avec la plus petite estimation pour le temps de fabrication des pièces restantes, pour au moins deux pièces;

e) Il génère la séquence de trajectoires de dépôt, simultanées, pour chaque module de dépôt supérieur (3) et chaque module de dépôt inférieur (4) attribué, en commençant le dépôt par la pose des contours suivie du remplissage, si nécessaire, dans lequel des mouvements de translation sans dépôt sont générés pour fabriquer des surfaces de dépôt disjointes, lorsque nécessaires, et des périodes d'inactivité sont générées, lorsque nécessaires, pour assurer l'inexistence de collisions entre au moins un module de plateforme (2), au moins un module de dépôt supérieur (3) et au moins un module de dépôt inférieur (4), pendant la fabrication;

f) Il optimise le temps réel de fabrication de la fabrication d'au moins deux pièces, en recherchant de multiples séquences de trajectoires.

**11.** Procédé selon la revendication 8 où, dans les cas où la fabrication d'au moins une pièce se termine alors que la fabrication d'au moins une autre pièce est toujours en cours, il est **caractérisé en ce que**:

a) Il génère des groupes de combinaisons de scénarios de fabrication composés de la combinaison d'au moins un module de plateforme disponible (2), d'au moins un module de dépôt supérieur inoccupé (3), d'au moins un module de dépôt inférieur inoccupé (4), attribués à la fabrication d'au moins une pièce restante;

b) Il divise itérativement l'aire de chaque couche d'au moins une pièce, par le nombre de modules de dépôt supérieurs (3) et le nombre de modules de dépôt inférieurs (4) attribués;

c) Il estime le temps de fabrication pour chaque pièce et scénario de fabrication ($T_{fabrication}$) donné par la somme du temps de fabrication pour chaque couche, calculé par l'intersection de la surface de dépôt, calculée en utilisant les chemins de dépôt nécessaires pour le remplissage et les contours de la couche, dans lequel le temps de fabrication estimé pour chaque module de dépôt supérieur (3) et chaque module de dépôt inférieur (4) ($T_{Mi}$) est donné par la somme du temps consacré au dépôt des contours ($C_{Mi\,k}$) et au dépôt du remplissage ($P_{Mi\,j}$) de chaque couche, dans laquelle l'estimation de temps de fabrication de chaque couche ($T_{cp}$) est égale à la plus grande estimation de temps des modules de dépôt

$$T_{Mi} = \sum_{k=1}^{K} C_{Mi\,k} + \sum_{j=1}^{J} P_{Mi\,j}$$

d)

$$T_{cp} = Max(T_{Mi}, i = 0, ..., N)$$

$$T_{fabrication} = \sum_{p=1}^{P} T_{cp} \; ;$$

d) Il sélectionne le scénario de fabrication avec la plus petite estimation pour le temps de fabrication des pièces restantes, pour au moins une pièce;

e) Il génère la séquence de trajectoires de dépôt, simultanées, pour chaque module de dépôt supérieur (3) et chaque module de dépôt inférieur (4) attribué, en commençant le dépôt par la pose des contours suivie du remplissage, si nécessaire, dans lequel des mouvements de translation sans dépôt sont générés pour fabriquer des surfaces de dépôt disjointes, lorsque nécessaires, et des périodes d'inactivité sont générées, lorsque nécessaires, pour assurer l'inexistence de collisions entre au moins un module de plateforme (2), au moins un module de dépôt supérieur (3) et au moins un module de dépôt inférieur (4), pendant la fabrication;

f) Il optimise le temps réel de fabrication de la fabrication de la pièce, en recherchant de multiples séquences de trajectoires.

Figure 1

Figure 2

Figure 3

Figure 4

Figure 5

Figure 6

Figure 7

Figure 8

Figure 9

Figure 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016067920 A1
- US 9011136 B1
- US 2015165676 A1